# EUROPÄISCHE PATENTSCHRIFT

(11) **EP 0 571 967 B1**
(45) Veröffentlichungstag und Bekanntmachung des Hinweises auf die Patenterteilung: **10.07.1996**
(21) Anmeldenummer: 93108458.6
(22) Anmeldetag: 25.05.1993
(51) Int. Cl.: F16L 21/00, F16L 25/00

(54) **Abdichtung an zusammensteckbaren Betonfertigteilen**
Sealing arrangement for interlocking prefabricated concrete elements
Dispositif pour l'étanchéification d'éléments en béton préfabriqués assemblables

(30) Priorität: 26.05.1992 DE 9207124 U; 17.12.1992 DE 9217222 U
(43) Veröffentlichungstag der Anmeldung: 01.12.1993
(73) Patentinhaber: Forsheda-Stefa GmbH, D-63477 Maintal (DE)
(72) Erfinder: Preisendörfer, Gerhard, W-6056 Heusenstamm (DE)
(74) Vertreter: Linde, Leif

(56) Entgegenhaltungen:
- FR-A- 754 300
- GB-A- 261 168
- US-A- 1 940 579
- US-A- 2 882 073

## Beschreibung

Die Erfindung bezieht sich auf eine Abdichtung an zusammensteckbaren Betonfertigteilen mit Spitzende und Glockenmuffenende, die einen sich axial erstreckenden Hohlraum umgeben und zwischen denen ein ringförmiger Spalt gebildet wird, der sich quer und parallel zur Achse der Betonfertigteile erstreckt.

Bei einer Abdichtung dieser Art (DE-A-38 18 064 A1) ist im ringförmigen Bereich der Einmündung des Spaltes in den Hohlraum eine Quetschdichtung angeordnet, die mit Verankerungsteilen in einem der Betonfertigteile bei dessen Herstellung mit eingebunden ist. Damit können Schachtbauwerke so hergestellt werden, daß die Ablagerung von Sedimenten und die Ansiedlung von Mikroorganismen in dem Spalt weitgehend verhindert werden. Bei diesen Schachtbauwerken und mehr noch bei Rohren kommen Verschiebungen quer zur Achse der Betonfertigteile vor, was etwa bei der Montage der Betonfertigteile zu knirschenden Geräuschen und Abrieb, manchmal auch zu gröberen Abplatzungen von Wandteilen führt. Damit die Betonfertigteile ineinandergreifen können, ist gewöhnlich ein glockenförmiges Ende und ein Spitzende vorgesehen. Beim glockenförmigen Ende läßt man die Formmuffe etwa 12 Stunden an dem sich erhärtenden Beton, bevor man die Formmuffe abzieht. Das Spitzende dagegen formt man gewöhnlich frei an, d.h. die Formwerkzeuge werden nach Erreichen einer minimalen Festigkeit des Betons entfernt. Demgemäß hat das Spitzende gewöhnlich keine so gute Form und Oberfläche wie das Glockenende. Beim Spitzende kommt es deshalb zur sogenannten Wasserumläufigkeit, d.h. Wasser kann sich entlang von Rillen ausbreiten, die bei der Herstellung des Spitzendes entstanden sind, und kann sich bei Beschädigungen von Rillen quer ausbreiten, was schließlich zur Überwindung der Dichtung führt.

Eine Abdichtung nach dem Oberbegriff des Anspruchs 1 ist aus der US-A-2 882 073 bekannt.

Der Erfindung liegt die Aufgabe zugrunde, eine Abdichtung an zusammensteckbaren Betonfertigteilen zu schaffen, bei der eine bessere Abdichtung, insbesondere an dem gefährdeten Spitzende, geschaffen wird und mit der Beschädigungen der Betonfertigteile bei der Montage weitgehend vermieden werden.

Die gestellte Aufgabe wird gemäß den Merkmalen des Anspruchs 1 gelöst. In dem ringförmigen Spalt ist eine profilierte Ringdichtung aus dauerelastischem Material durch Aufdehnen auf dem Spitzende eingespannt, die wenigstens einen Kompressionsdichtungsteil und einen sich parallel zur Achse der Betonfertigteile erstreckenden, lappenförmigen Fortsatz aufweist. Die mit Spannung anliegende, profilierte Ringdichtung vergrößert die Dichtungsfläche am Spitzende, und die Wasserumläufigkeit des Spitzendes wird eingeschränkt. Der lappenförmige Fortsatz bildet zudem eine Querschubbegrenzung für die Betonfertigteile, was sich sowohl bei der Montage als auch im fertigen Zustand des mit den Betonfertigteilen errichteten Bauwerks hinsichtlich der Gefahr von Beschädigungen und für die Dichtwirkung günstig auswirkt.

Weiterbildungen der Erfindung sind in den Unteransprüchen gekennzeichnet.

Die Erfindung wird anhand von Ausführungsbeispielen beschrieben. Dabei zeigt:
- Fig. 1: eine Ringdichtung im Querschnitt,
- Fig. 2: die Ringdichtung, auf ein Spitzende aufgezogen,
- Fig. 3: die Dichtung im zusammengepreßten Zustand zwischen Glockenende und Spitzende,
- Fig. 4: eine weitere Ausführungsform der Ringdichtung, auf ein Spitzende aufgezogen,
- Fig. 5: eine weitere Ringdichtung zwischen Betonfertigteilen mit Falzverbindung,
- Fig. 6: eine Draufsicht auf einen extrudierten Dichtungsstreifen,
- Fig. 7: einen Querschnitt durch den extrudierten Dichtungsstreifen nach Fig. 6,
- Fig. 8: eine Draufsicht auf einen Abschnitt des Dichtungsstreifens nach Rundbiegung,
- Fig. 9: einen Querschnitt durch den Rand eines Schachtes mit einer Ringdichtung,
- Fig. 10: einen Querschnitt durch einen weiteren extrudierten Dichtungsstreifen,
- Fig. 11: einen Abschnitt einer Ringdichtung, die aus dem Dichtungsstreifen der Fig. 10 hergestellt ist,
- Fig. 12: einen Abschnitt einer abgewandelten Ringdichtung,
- Fig. 13: einen Querschnitt durch den Rand eines Schachtes mit der Ringdichtung aus Fig. 11 und
- Fig. 14 bis 16: Ringdichtungsanordnungen, jeweils auf ein Spitzende aufgezogen.

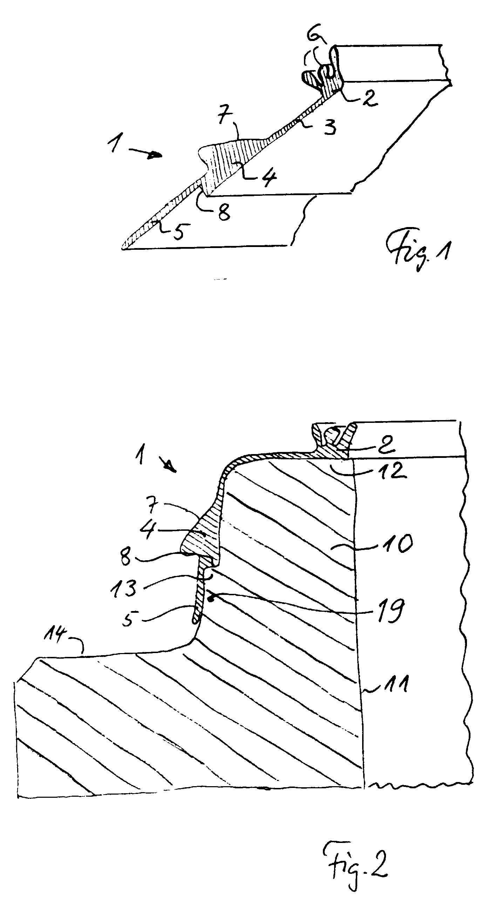

Fig. 1 zeigt die erfindungsgemäß profilierte Ringdichtung 1, die aus einem Stück eines Strangpreßprofilteils hergestellt ist, dessen Enden miteinander verklebt oder verschweißt sind. Die Ringdichtung nimmt dabei den Mantel eines Kegelstumpfes ein. Je nach der Durchmesserdifferenz des oberen und unteren Randes sowie der Größe des Umfangs kann der Öffnungswinkel des Kegelstumpfes spitzer oder stumpfer sein, so daß im Extremfall die Dichtung 1 entlang eines Zylindermantels oder entlang einer Ebene (wie bei einer Flachdichtung) angeordnet ist.

Die Ringdichtung 1 besteht im wesentlichen aus vier Abschnitten, nämlich einem Quetschdichtungsteil 2, einem Verbindungsteil 3, einem Einklemmdichtungsteil 4 und einem lappenförmigen Fortsatz 5. Der Quetschdichtungsteil 2 enthält einzelne Stegringe 6, die für eine größere Nachgiebigkeit der Dichtung sorgen, die aus einem dauerelastischen Material gefertigt ist. Der Einklemmdichtungsteil 4 enthält eine Schrägfläche 7, so daß insgesamt eine Rampe gebildet wird. Der Einklemmdichtungsteil 4 wird nach unten von einer Schulter 8 begrenzt, von der aus sich der lappenförmige Fortsatz 5 erstreckt.

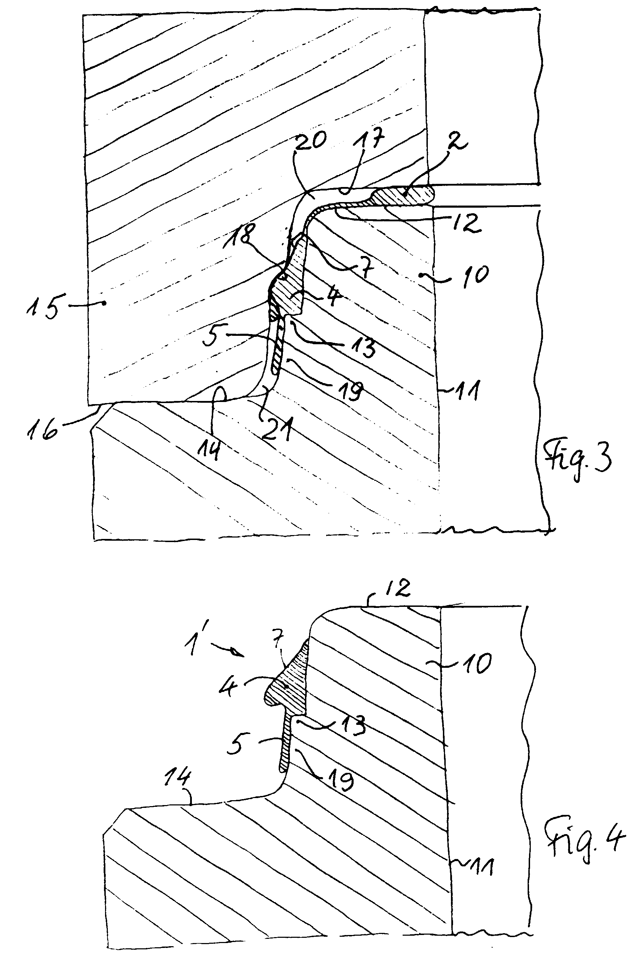

Fig. 2 zeigt einen Querschnitt durch den Randbereich eines Spitzendes 10 und der aufgezogenen Ringdichtung 1. Wie im Vergleich zu Fig. 1 ersichtlich, ist diese radial ausgedehnt worden und liegt somit mit Spannung auf dem Spitzende 10 auf. Wenn das Betonfertigteil am Spitzende beispielsweise einen Durchmesser von 1.090 mm aufweist, kann eine flache Ringdichtung mit einem Innendurchmesser von 985 mm verwendet werden, um sich ohne Überdehnung auf dem Spitzende zu halten. Bei kleineren Durchmessern der Betonfertigteile wird die Kegelstumpfform mit zunehmend spitzerem Winkel des Kegelstumpfs gewählt. Wie aus Fig. 2 ersichtlich, kommt der Kompressionsdichtungsteil 2 auf die Stirnseite 12 nahe der zylindrischen Innenfläche 11 des Betonfertigteils zu liegen. Am Spitzende 10 ist ferner eine kleine Schulter 13 angeformt, an der die Schulter 8 der Ringdichtung 1 aufliegt. Das Spitzende geht über eine große Schulter 14 in den Rest des Betonfertigteil über, und der Wurzelbereich 19 des Spitzendes 10 benachbart der Schulter 13 wird von dem lappenförmigen Fortsatz 5 bedeckt.

Fig. 3 zeigt einen Schnitt durch einen Randbereich von zusammengesteckten Betonfertigteilen mit da Spitzende 10 und einem Glockenmuffenende 15. Das Glockenmuffenende weist eine Stirnfläche 16, eine große Schulter 17 und eine kleine Schulter 18 auf. Wenn die Betonfertigteile ineinander geschoben werden, verbleiben Spalte 20 und 21, deren Größe von der relativen Lage der Teile abhängt, d.h. bei exzentrischem Einbau könnte sich an einer Seite auch eine Weite des Spalts 21 von Null und an der anderen Seite eine doppelte Spaltweite ergeben. Ohne den Fortsatz 5 kann die Spaltweite Null zu Beschädigungen der aufeinandertreffenden Betonfertigteile und Abquetschen des Teils 4 führen, während auf der anderen Seite die doppelte Spaltweite zu ungenügender Zusammenpressung des Dichtungsteils 4 führen könnte. Die Existenz des Teils 5 sorgt beim Zusammenbau für eine gewisse Führung der Betonfertigteile, so daß die geschilderten extremen Verhältnisse sicher vermieden werden.

Sobald die Betonfertigteile komplett zusammengeschoben sind, drückt die große Schulter 17 die Ringstege 6 zusammen, so daß sich ein flaches Quetschdichtungsteil 2 ergibt. Der radial nach innen weisende Zweig des ringförmigen Spaltes 20 wird von der Quetschdichtung 2 gut abgedichtet, so daß er im wesentlichen ohne Einschwemmungen und Besiedlung durch Mikroorganismen verbleibt. Der vertikale Zweig des Ringspaltes 20 wird durch den Einklemmdichtungsteil 4 begrenzt, wobei die Schulter 18 und die Rampenflächen 7 schräg aufeinander einwirken und zu einer Zusammenpressung im Bereich des Einklemmdichtungsteils 4 beitragen. Die Montagebewegung zwischen Glockenmuffenende und Spitzende kommt zu einem Abschluß, wenn die Flächen 14 und 16 aufeinandertreffen.

Der zwischen dem Glockenmuffenende und dem Spitzende verbleibende, ringförmige Spalt 21 ermöglicht noch eine gewisse Querverschiebung zwischen Spitzende und Glockenmuffenende, wenn die Querkräfte entsprechend groß werden, wie es in unruhigem Boden vorkommt. Das Dichtungsteil 4 ist nicht in der Lage, die Querverschiebung ohne Beschädigung zu begrenzen. Dies wird aber durch den Lappen 5 zuverlässig verhindert, da sich dieser breitflächig zwischen Spitzende und Glockenmuffenende legt.

Es ist somit ersichtlich, daß der Spalt 20 zwischen den beiden Betonfertigteilen dauerelastisch in einem Arbeitsgang verschlossen wird. Die Dichtung 1 schränkt ferner die Querverschiebung zwischen den beiden Bauteilen erheblich ein. Durch die großflächige Anlage der Dichtung 1 an dem Spitzende 10, das gewöhnlich das weniger gut gefertigte Teil ist, wird die Wasserumläufigkeit des Spitzendes weitgehend verhindert. Im übrigen kann der Erbauer und Betreiber von Schachtanlagen feststellen, ob überhaupt eine Dichtung eingesetzt ist, weil man dies an dem Quetschdichtungsteil 2 merken kann, welches am Eingang zum Spalt 20 vorhanden sein muß.

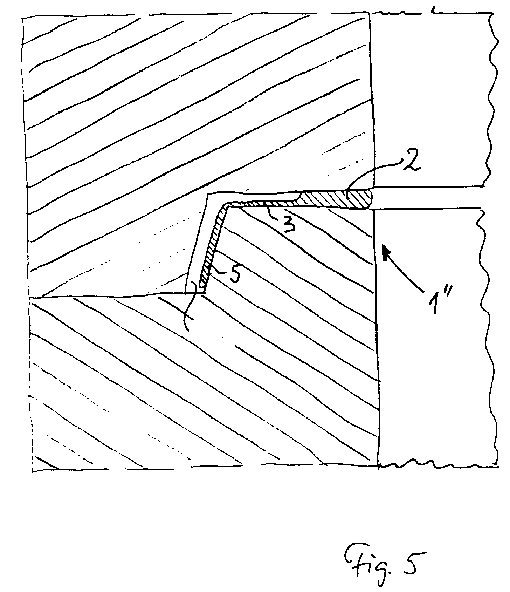

Fig. 4 zeigt eine reduzierte Ringdichtung 1', bei der der Quetschdichtungsteil 2 und der Verbindungsteil 3 fehlen. Diese reduzierte Dichtung 1' wird ähnlich wie die komplette Ringdichtung 1 mit Spannung auf das Spitzende 10 aufgezogen. Die reduzierte Ringdichtung 1' wird dann verwendet, wenn es nur auf die Verhinderung der Wasserumläufigkeit des Spitzendes und der Einschränkung der Querverschiebung zwischen Spitzende und Glockenmuffenende ankommt bzw. der Eintritt von Verunreinigungen in den Spalt 20 anderweitig verhindert wird, z.B. mittels der am Glockenmuffenende eingebundenen Quetschdichtung nach der DE-A-38 18 064 A1.

Als dauerelastisches Material der Dichtung kommen insbesondere Gummi oder gummiähnliche Stoffe in Betracht. Relativ weiche, kompressionsfähige Qualitäten werden bevorzugt.

Fig. 5 zeigt eine weitere Abwandlung 1'' der Ringdichtung, bei der der Quetschdichtungsteil 2, der Verbindungsteil 3 und der lappenförmige Fortsatz 5 vorhanden sind. Diese Ausgestaltung der Ringdichtung ist für sogenannte Falzverbindungen zwischen Betonfertigteilen gedacht, bei denen die Muffe 15'' und das Spitzende 10'' weniger Bauhöhe in Anspruch nehmen und insgesamt weniger aufwendig sind. Auch hier wird die Querverschiebbarkeit der Teile untereinander eingeschränkt und die Wasserumläufigkeit des Bauteils 10'' durch die Existenz der Dichtungsteile 3 und 5 weitgehend verhindert.

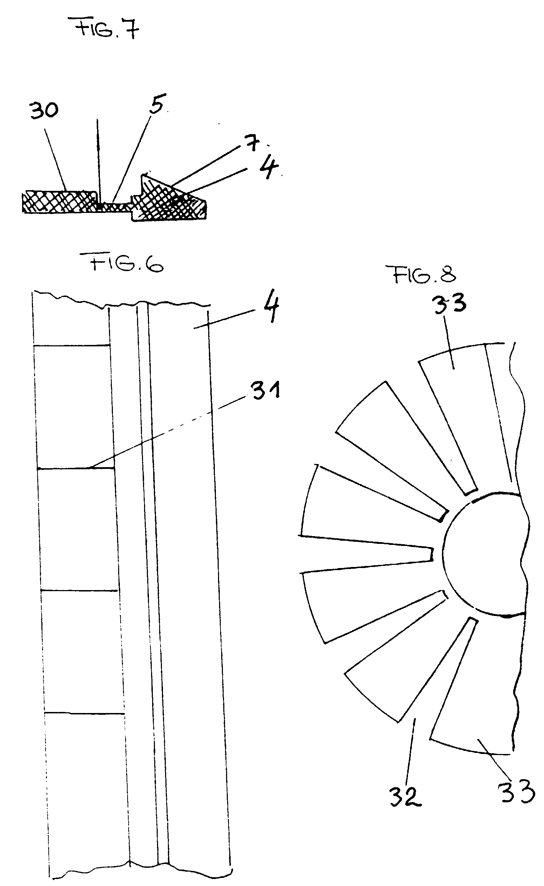

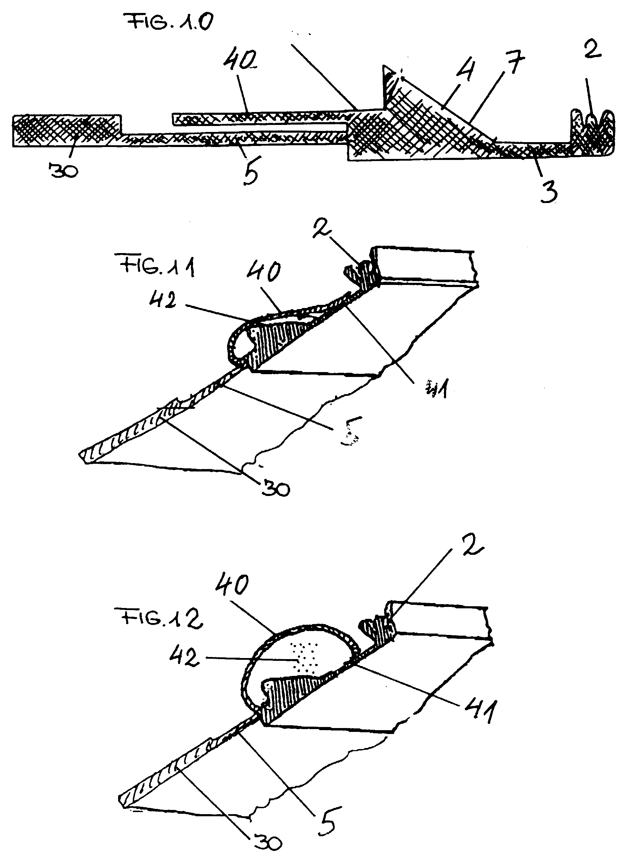

Eine weitere Abwandlung 1''' der Ringdichtung ist in den Fig. 6 bis 9 dargestellt. Diese Abwandlung geht von der Ausführungsform nach Fig. 4 aus und enthält noch eine zusätzliche, ringförmige Flachdichtung 30 für die Flächen 14 und 16 der Betonfertigteile. Die Flachdichtung 30 kann als getrennter, loser Ring aufgelegt werden, es ist aber auch möglich, die Flachdichtung mit der restlichen Ringdichtung zu vereinigen, z.B. durch Anvulkanisieren oder durch einstückige Herstellung mit der Ringdichtung. Bei dieser Vorgehensweise stellt man das in den Fig. 6 und 7 dargestellte Strangpreßprofil aus geeignetem Gummimaterial her, schneidet passende Längen ab und verbindet deren Enden miteinander zur Bildung der Ringdichtung. Einschnitte 31 in der Flachdichtung 30 erleichtern das Biegen im Falle eines einstückigen Strangpreßprofils. Man kann auch Dreiecke 32 ausschneiden, so daß Sektoren 33 stehenbleiben, wie in Fig. 8 dargestellt. Die Flachdichtung 30 dient im wesentlichen nur zur Verhinderung des Auftreffens von Beton auf Beton.

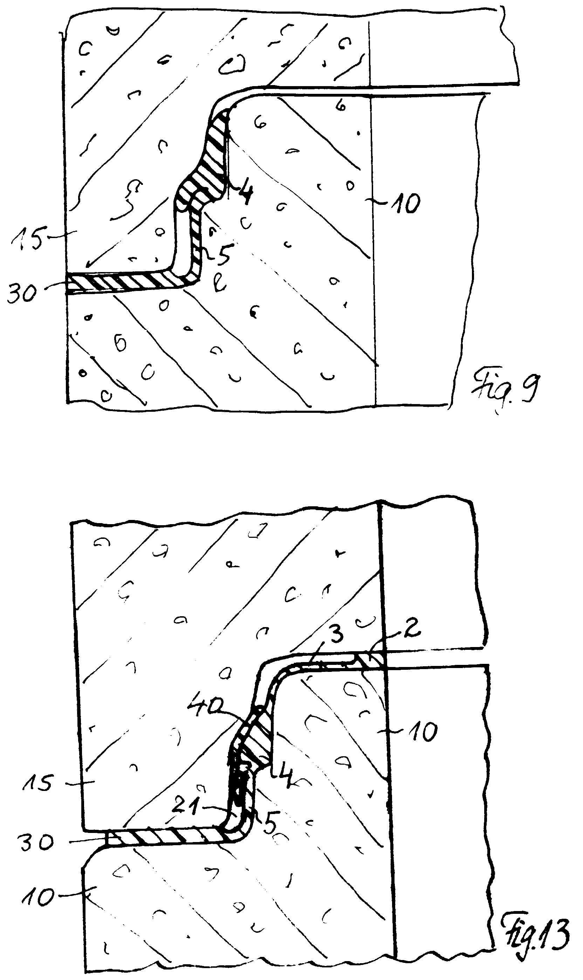

Fig. 10 bis 12 zeigen Dichtungsprofile zur Herstellung von Dichtungen mit Gleitmantel. Zu diesem Zweck weist das Profil, welches die Merkmale nach den Ausführungsformen der Fig. 1 und 7 aufweist, noch einen Umschlagslappen 40 auf, der parallel zu dem lappenförmigen Fortsatz 5 angeordnet ist. Wie bei den bisherigen Ausführungsformen werden Stücke des Profils mit ihren Enden zusammengefügt und miteinander verbunden, wobei jedoch der Umschlagslappen 40 umgelegt worden ist, wie in Fig. 11 angedeutet, so daß eine geschlossene Ringdichtung entsteht. Der umgeschlagene Lappen 40 kann mit seinem Saum 41 an dem Verbindungsteil 3 anvulkanisiert werden, wie in Fig. 12 angedeutet. In den Zwischenraum 42, der zwischen dem Abdichtungsteil 4 und dem Umschlagslappen 40 gebildet wird, kann ein Gleitmittel eingebracht werden, welches die Montage der Betonfertigteile erleichtert.

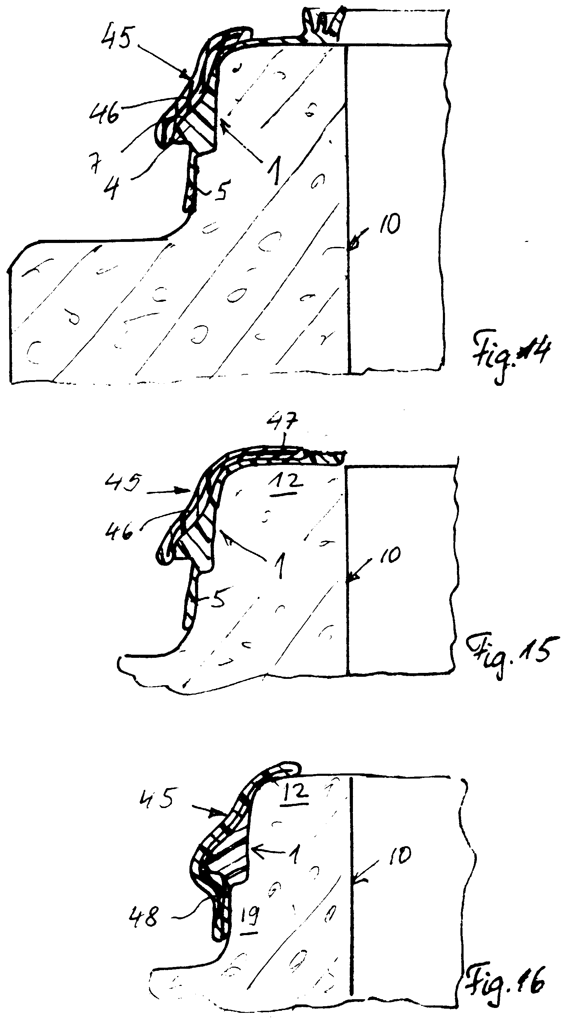

Fig. 13 zeigt eine derartige Dichtung im eingebauten Zustand. Der Gleitmantel 40 wird teilweise in den Spalt 21 hineingezogen und liegt auf dem lappenförmigen Fortsatz 5 auf, so daß dessen Wirkung verbessert wird. Es wird jedoch darauf hingewiesen, daß der Gleitmantel 40 die Funktion des Lappens 5 nicht ersetzen kann, weil sich der Lappen 5 bereits vor dem Zusammenschieben der Betonfertigteile an einer Stelle befindet, an der der Spalt 21 verbleibt, während der Gleitmantel 40 erst mit Entstehen des Spaltes 21 in diesen ''hineingewürgt'' wird. Bei leicht schräger oder exzentrischer Montage der Betonfertigteile zueinander unterliegt der Gleitmantel 40 der Gefahr der Abscherung, während dies hinsichtlich des Lappens 5 nicht der Fall ist.

Fig. 14 zeigt eine auf ein Spitzende aufgezogene Dichtungsanordnung, die eine Ringdichtung 1 und einen Gleitschlauch 45 enthält. Der Gleitschlauch 45 ist ringförmig, in sich geschlossen und im wesentlichen plattgedrückt. Das Innere 46 enthält etwas Gleitmittel. Der Gleitschlauch 45 überdeckt wenigstens die Schrägfläche 7 des Einklammdichtungsteils 4. Der Gleitschlauch 45 verhält sich ähnlich wie der Gleitmantel 40, d.h. er erleichtert den Zusammenbau von Betonfertigteilen.

In der Ausführungsform nach Fig. 15 ist die Breite des Gleitschlauchs 45 größer gewählt, so daß dessen innerer Rand 47 die Stirnfläche 12 des Spitzendes 10 teilweise überdeckt. Zwar wird bei der Montage der Betonfertigteile dieser Rand 47 nach außen gezogen, jedoch kann die Breite des Schlauchs so gewählt werden, daß der Gleitschlauch nicht vollständig von der Stirnfläche 12 weggezogen wird. Der verbleibende Rand 47 wirkt dann wie das Quetschdichtungsteil 2 in der Ausführungsform nach Fig. 1 bis 3, weswegen ein solches Quetschdichtungsteil in der Ausführungsform nach Fig. 15 weggelassen werden kann.

In der Ausführungsform nach Fig. 16 ist der Gleitschlauch 45 noch breiter gewählt und überdeckt das Spitzende beginnend mit dem äußeren Rand der Stirnfläche 12 bis zu dem Wurzelbereich 19. Der diesen Wurzelbereich 19 überdeckende Rand 48 stellt ein Äquivalent zu dem lappenförmigen Fortsatz 5 dar, weil er bereits vor dem Zusammenbau der Betonfertigteile den Wurzelbereich 19 bedeckt. Wenn demnach die Betonfertigteile ein wenig schräg oder exzentrisch montiert werden, trifft die innere Wölbung des Glockenmuffenendes 15 auf diesen Rand 48 und zieht ihn weiter in den Spalt 21 hinein, ohne ihn abscheren zu können.

## Patentansprüche

1. Abdichtung an zusammensteckbaren Betonfertigteilen mit Spitzende (10) und Glockenmuffenende (15), die einen sich axial erstreckenden Hohlraum (11) umgeben und zwischen denen ein ringförmiger Spalt (20, 21) gebildet wird, der sich quer und parallel zur Achse der Betonfertigteile erstreckt,
wobei in dem ringförmigen Spalt (20, 21) eine profilierte Ringdichtung (1) aus dauerelastischem Material eingebracht ist, die wenigstens einen Kompressionsdichtungsteil (2, 4) aufweist, und die im gespannten Zustand auf dem Spitzende (10) aufgezogen ist, dadurch gekennzeichnet,
daß an der Ringdichtung ein sich parallel zur Achse der Betonfertigteile erstreckender, lappenförmiger Fortsatz (5, 48) aus dauerelastischem Material vorgesehen ist, der den Wurzelbereich (19) des Spitzendes (10) vor dem Zusammenstecken der Betonfertigteile bedeckt.

2. Abdichtung nach Anspruch 1,
dadurch gekennzeichnet, daß die profilierte Ringdichtung (1) aus einem Stück eines Strangpreßprofilteils hergestellt ist, dessen Enden miteinander verklebt oder verschweißt sind.

3. Abdichtung nach Anspruch 2,
dadurch gekennzeichnet, daß die profilierte Ringdichtung im entspannten Zustand im wesentlichen entlang eines Kegelstumpfmantels angeordnet ist.

4. Abdichtung nach Anspruch 2,
dadurch gekennzeichnet, daß die profilierte Ringdichtung oder Teile (30) hiervon im entspannten Zustand im wesentlichen entlang einer Ebene angeordnet sind.

5. Abdichtung nach Anspruch 2,
dadurch gekennzeichnet, daß die profilierte Ringdichtung oder Teile (45) hiervon im entspannten Zustand im wesentlichen entlang eines Zylindermantels angeordnet sind.

6. Abdichtung nach einem der Ansprüche 1 bis 5,
dadurch gekennzeichnet, daß die Abdichtung eine Flachdichtung (30) umfaßt, die zur Vermeidung des Aufeinandertreffens von Beton auf Beton angeordnet ist.

7. Abdichtung nach Anspruch 6,
dadurch gekennzeichnet, daß die Flachdichtung (30) zwischen der Stirnfläche (16) des Muffenendes (15) und der großen Schulter (14) des Spitzendes (10) anzuordnen ist.

8. Abdichtung nach einem der Ansprüche 1 bis 7,
dadurch gekennzeichnet, daß ein Einklemmdichtungsteil (4) mit überdeckendem Gleitmantel (40) oder Gleitschlauch (45) vorgesehen ist.

9. Abdichtung nach Anspruch 8,
dadurch gekennzeichnet, daß der Gleitmantel (40) als Umschlagslappen ausgebildet ist, der Teil eines Profils ist, das zu der Ringdichtung (1) geformt ist.

10. Abdichtung nach Anspruch 8,
dadurch gekennzeichnet, daß der Gleitschlauch (45) mit seinem inneren Rand (47) die Stirnfläche (17) des Spitzendes (10) wenigstens teilweise bedeckt.

11. Abdichtung nach Anspruch 8 oder 10,
dadurch gekennzeichnet, daß der Gleitschlauch (45) mit seinem äußeren Rand (48) den Wurzelbereich (19) desSpitzendes (10) vor dem Zusammenstecken der Betonfertigteile wenigstens teilweise bedeckt.

## Claims

1. A sealing arrangement for interlocking prefabricated concrete elements having a spigot end (10) and a socket end (15) which enclose an axially extending hollow space (11) and between which there is formed an annular gap (20, 21) which extends transversely to and parallel with the axis of the prefabricated concrete elements, a profiled annular seal (1) of a permanent elastic material being positioned in the annular gap (20, 21) which annular seal has at least one compression sealing portion (2, 4) and which in a tensioned condition is drawn onto the spigot end (10), **characterized** in that there is on the annular seal provided a flap-shaped extension (5, 48) of permanent elastic material extending parallel with the axis of the prefabricated concrete elements, said flap-shaped extension covering prior to the interlocking of the prefabricated concrete elements the base area (19) of the spigot end (10).

2. A sealing arrangement as claimed in claim 1, **characterized** in that the profiled annular seal (1) is manufactured from a unitary extruded profile section, the ends of which are glued or welded to each other.

3. A sealing arrangement as claimed in claim 2, **characterized** in that the profiled annular seal is in a relaxed condition positioned substantially on the envelope surface of a truncated cone.

4. A sealing arrangement as claimed in claim 2, **characterized** in that the profiled annular seal or parts (30) thereof are in a relaxed condition positioned substantially on one plane.

5. A sealing arrangement as claimed in claim 2, **characterized** in that the profiled annular seal or parts (45) thereof are in a relaxed condition positioned substantially on the envelope surface of a cylinder.

6. A sealing arrangement as claimed in any of claims 1 - 5, **characterized** in that the sealing arrangement includes a flat seal (30) adapted to prevent that concrete engages concrete.

7. A sealing arrangement as claimed in claim 6, **characterized** in that the flat seal (30) is positioned between the end surface (16) of the socket end (15) and the large shoulder (14) of the spigot end (10).

8. A sealing arrangement as claimed in any of claims 1 - 7, **characterized** in that the arrangement comprises a compression portion (4) having a covering sliding jacket (40) or sliding tube (45).

9. A sealing arrangement as claimed in claim 8, **characterized** in that the sliding jacket (40) is formed as a casing flap forming a part of a profile unitary with the annular seal (1).

10. A sealing arrangement as claimed in claim 8, **characterized** in that the sliding tube (45) at least partly covers the outer surface (17) of the spigot end (10) by means of its inner edge portion (47).

11. A sealing arrangement as claimed in claim 8 or 10, **characterized** in that the sliding tube (45) prior to the interlocking of the prefabricated concrete elements at least partially covers the base area (19) of the spigot end (10) by means of its outer edge portion (48).

## Revendications

1. Dispositif d'étanchéité pour des éléments préfabriqués en béton à assemblage par emboîtement comprenant un about mâle (10) et about femelle (15) qui entourent une cavité axiale (11) et délimitent entre eux un interstice annulaire (20, 21) s'étendant transversalement et parallèlement à l'axe des éléments préfabriqués en béton, un joint annulaire (1) profilé en un matériau à élasticité permanente étant introduit dans l'interstice annulaire (20, 21), ce joint comprenant au moins une partie d'étanchéité à compression (2, 4) et étant monté à l'état tendu sur l'about mâle (10), **caractérisé** par le fait qu'il est prévu, sur le joint annulaire, un prolongement (5, 48) en forme de jupe, en matériau à élasticité permanente, s'étendant parallèlement à l'axe des éléments préfabriqués en béton et recouvrant la zone de base (19) de l'about mâle (10) avant l'emboîtement des éléments préfabriqués en béton.

2. Dispositif d'étanchéité suivant la revendication 1, **caractérisé** par le fait que le joint annulaire (1) profilé est fabriqué à partir d'un tronçon de profilé extrudé dont les deux extrémités sont réunies par collage ou soudage.

3. Dispositif d'étanchéité suivant la revendication 2, **caractérisé** par le fait que le joint annulaire profilé est disposé, à l'état détendu, sensiblement le long d'une enveloppe de tronc de cône.

4. Dispositif d'étanchéité suivant la revendication 2, **caractérisé** par le fait que le joint annulaire profilé ou des parties (30) de ce joint est (sont), à l'état détendu, disposé(es) essentiellement le long d'un plan.

5. Dispositif d'étanchéité suivant la revendication 2, **caractérisé** par le fait que le joint annulaire profilé ou des parties (45) de ce dernier est (sont), à l'état détendu, disposé(es) essentiellement le long d'une enveloppe de cylindre.

6. Dispositif d'étanchéité suivant l'une des revendications 1 à 5, **caractérisé** par le fait que le dispositif d'étanchéité comprend une partie plate (30) disposée pour éviter le contact de béton sur béton.

7. Dispositif d'étanchéité suivant la revendication 6, **caractérisé** par le fait que la partie plate (30) est disposée entre la face frontale (16) de l'about femelle (15) et le grand épaulement (14) de l'about mâle (10).

8. Dispositif d'étanchéité suivant l'une des revendications 1 à 7, **caractérisé** par le fait qu'il est prévu une partie d'étanchéité à serrage (4) avec une enveloppe de glissement (40) ou une gaine de glissement (45) recouvrant cette partie.

9. Dispositif d'étanchéité suivant la revendication 8, **caractérisé** par le fait que l'enveloppe de glissement (40) est réalisée sous la forme d'une jupe à rabattement qui fait partie d'un profilé conformé en joint annulaire (1).

10. Dispositif d'étanchéité suivant la revendication 8, **caractérisé** par le fait que la gaine de glissement (45) recouvre, par son bord intérieur (47), au moins partiellement la surface frontale (17) de l'about mâle (10).

11. Dispositif d'étanchéité suivant la revendication 8 ou 10, **caractérisé** par le fait que la gaine de glissement (45) recouvre, par son bord extérieur (48), au moins partiellement la zone de base (19) de l'about mâle (10) avant l'emboîtement des éléments préfabriqués en béton.
